# EUROPÄISCHE PATENTSCHRIFT

(11) **EP 0 364 764 B1**
(45) Veröffentlichungstag und Bekanntmachung des Hinweises auf die Patenterteilung: **01.09.1993**
(21) Anmeldenummer: 89117538.2
(22) Anmeldetag: 22.09.1989
(51) Int. Cl.: F16D 1/09

(54) **Spannsatz zur übertragung von Drehmomenten und/oder Axialkräften**
Loading assembly for transmitting torque and/or axial force
Unité de serrage pour la transmission de couples et/ou de forces axiales

(30) Priorität: 21.10.1988 DE 3835894
(43) Veröffentlichungstag der Anmeldung: 25.04.1990
(73) Patentinhaber: Müllenberg, Ralph, D-41516 Grevenbroich (DE)
(72) Erfinder: Müllenberg, Ralph, D-41516 Grevenbroich (DE)
(74) Vertreter: Palgen, Peter, Dr. Dipl.-Phys.

(56) Entgegenhaltungen:
- EP-A- 0 007 217
- FR-A- 2 343 924
- GB-A- 624 872
- GB-A- 704 139
- GB-A- 758 899
- US-A- 1 489 976
- US-A- 1 732 355
- US-A- 2 617 672
- US-A- 3 614 140

## Beschreibung

Die Erfindung bezieht sich auf einen Spannsatz der dem Oberbegriff des Anspruchs 1 entsprechenden Art.

Ein ähnlicher Spannsatz ist aus der DE-OS 34 44 608 bekannt. Hierbei ist das Gewinde am dünnwandigen Ende des inneren Konusrings angebracht und greift der Schraubring mit einem radial nach außen vorspringenden Umfangsbund hinter einen radial nach innen vorspringenden Umfangsbund des äußeren Konusrings. Der Eingriff wird zustande gebracht, indem der äußere Konusring radial elastisch etwas gedehnt wird. Beim Verspannen des Spannsatzes wird der äußere Konsuring unter Anlage seiner Stirnfläche am Schraubring auf den inneren Konusring gegen dessen dickwandiges Ende hin hinaufgedrückt. Beim Abziehen kommt die Hinterschneidung an den Umfangsbunden des Schraubrings und des äußeren Konusrings zum Tragen.

Ein Umfangsbund, der unter elastischer Dehnung eines der Konusringe zum Eingriff an einer Hinterschneidung gebracht wird, kann nur eine geringe Höhe aufweisen. Dementsprechend ist die über einen solchen Umfangsbund aufbringbare Zugkraft beschränkt. Die nur mögliche geringe Stufe neigt zu Verformungen unter hohen Flächenpressungen. Bei selbsthemmenden Konuswinkeln, wie sie zur Erzeugung hoher Spannkräfte meist notwendig sind, sind die Lösekräfte praktisch genauso groß wie die Spannkräfte. Der Spannsatz nach der DE-OS 34 44 608 ist also nur für begrenzte Drehmomente geeignet.

Außerdem ist nachteilig, daß der Schraubring sich im wesentlichen vor der Stirnseite des äußeren Konusrings befindet, d.h. axial außerhalb der Konusringe, und so die axiale Baulänge des Spannsatzes vergrößert.

Aus der EP-OS 7 217 ist ein gattungsgemäßer Spannsatz bekannt, bei welchem die Anordnung des Gewindes relativ zu der der Konusflächen gleich ist, jedoch der Schraubring einen zylindrischen, über das Ende des äußeren Konusrings hinübergreifenden Ansatz aufweist, der mit einem nach innen vorspringenden Bund in eine äußere Umfangsnut des äußeren Konusrings eingreift. Auch hierbei wird der Eingriff unter elastischer Verformung mindestens eines der Partner hergestellt und ist dementsprechend die Eingriffshöhe an der Hinterschneidung beschränkt. Das Verspannen des Spannsatzes geschieht durch Anlage der Stirnseite des Ansatzes an einer Flanke der Nut des äußeren Konusrings, wodurch der wegen der Notwendigkeit der Verformung des Ansatzes beim Herstellen des Eingriffs und der sich daraus ergebenden Dünnwandigkeit des Ansatzes die Gefahr des Ausbeulens und sonstiger Verformungen beim Aufbringen der axialen Druckkräfte für die Verspannung besteht.

Aus der GB-A-624872 ist eine Spannanordnung zum Verbinden axial fluchtender Wellen bekannt, die von einer Verbindungsbüchse umgeben sind. Die eine Welle hat am Ende einen Konuszapfen, über den die Verbindungsbüchse mit einem Innenkonus greift und auf den sie mittels eines einen äußeren Kragen der Verbindungsbüchse hintergreifenden Schraubrings hinaufgezogen wird. Ein äußeres Bauteil in Gestalt eines Lagers ist axial außerhalb des Konuszapfens auf einem zylindrischen Teil der Verbindungsbüchse angeordnet und anderweitig festgelegt.

Der Erfindung liegt die Aufgabe zugrunde, einen gattungsgemäßen Spannsatz so auszugestalten, daß größere Spannkräfte möglich sind.

Diese Aufgabe wird durch die in Anspruch 1 wiedergegebene Erfindung gelöst.

Der wesentliche Punkt hierbei ist, daß durch die angegebene Ausgestaltung zur Herstellung des Eingriffs der Umfangsbunde keine elastische Verformung derselben mehr erforderlich ist. Der Schraubring kann über die zylindrische Außenumfangsfläche des äußeren Konusrings hinübergeschoben werden, bis sein nach innen vorspringender Umfangsbund an dem nach außen vorspringenden Umfangsbund des äußeren Konusrings zur Anlage kommt. Beide zusammen können sodann über den inneren Konusring von dessen dünnwandigem Ende her hinübergeschoben werden, bis das Innengewinde des Schraubrings zum Angriff an dem Außengewinde des inneren Konusrings kommt und die Verspannung beginnt. Natürlich kann der Schraubring auch über die bereits zusammengefügten inneren und äußeren Konusringe geschoben werden. Alle zusammenwirkenden Teile können wesentlich stabiler gestaltet werden, weil sie für die Herstellung des Eingriffs nicht mehr verformt werden müssen. Dementsprechend sind auch die aufbringbaren Kräfte größer.

Wenn die zusammenwirkenden Konusflächen des inneren und des äußeren Konusrings einen Konuswinkel aufweisen, der im Selbsthemmungsbereich liegt, löst sich der Spannsatz nach dem Lösen des Schraubrings nicht von selbst. Es müssen vielmehr der Löserichtung entgegengesetzte Kräfte aufgewandt werden, um den äußeren Konusring vom inneren wieder abzuschieben. Dies kann in einer Ausgestaltung der Erfindung gemäß Anspruch 2 verwirklicht werden.

Eine weitere Ausgestaltung der Erfindung ist Gegenstand des Anspruchs 3. Der Schraubring kann hierbei so weit angezogen werden, wie es die zur Verfügung stehenden Mittel drehmomentmäßig zulassen. Die Umfangsbunde liegen dann mit einer gewissen Kraft aneinander an, und es wird ein bestimmter Verspannungszustand schon erreicht sein. Die endgültige Verspannung jedoch folgt anschließend hydraulisch, indem die Kolben/Zylindereinheiten betätigt werden und den äußeren Konusring weiter auf den inneren Konusring hinaufziehen.

Das gleiche Prinzip kann auch zum Lösen des Spannsatzes verwendet werden, indem gemäß Anspruch 4 Kolben/Zylindereinheiten gegen das auf der zylindrischen Außenumfangsfläche des äußeren Konusrings sitzende Bauteil wirken. Es wird auf diese Weise eine über den Schraubring auf den inneren Konusring übertragene Druckkraft erzeugt, die auf Abschieben der Konusringe voneinander wirkt.

Das gemäß Anspruch 5 vorzusehende Spiel ist zweckmäßig, damit am Innenumfang des nach innen vorspringenden Umfangsbundes der Schraubmuffe beim Anziehen keine Reibung auftritt.

Die Verschraubung nach Anspruch 6 erlaubt eine axiale Justierung des äußeren Bauteils und ist insbesondere zweckmäßig, wenn es darum geht, äußere Bauteile an vertikalen Stangen oder Säulen festzulegen.

Eine besondere Ausführungsform der Erfindung ist Gegenstand des Anspruchs 7. Der innere Konusring ist hierbei verdoppelt, und es sind auch die übrigen Spannelemente dementsprechend doppelt vorhanden. Dies erlaubt die Ausbildung einer Wellen- oder Rohrkupplung, wobei die Wellenenden von den beiden Enden her in den Doppelkonusring hineingesteckt werden, bis die Stirnseiten in der Mitte einander gegenüberliegen. Das Anziehen der beiden Schraubringe kann unabhängig voneinander erfolgen.

Eine Wellenkupplung mit einem die Verbindung herstellenden Doppelkonusring und zwei äußeren Konusringen ist für sich genommen aus der US-A-1 732 355 bekannt. Hierbei ist allerdings nur eine Schraubmuffe vorhanden und weicht die konstruktive Ausbildung hinsichtlich der Konusringe und ihrer Anordnung ab.

Eine weitere in der Praxis wichtige Ausführungsform ist die eines Kupplungsflansches nach Anspruch 8.

Um auch den Bereich des Umfangsbundes des äußeren Konusrings noch zur Übertragung von radialen Klemmkräften nutzen zu können, empfiehlt sich eine Abschrägung nach Anspruch 9, die dazu führt, daß von den axialen Kräften des Schraubringes radiale Komponenten entstehen.

Der bevorzugte Winkel ist 45° (Anspruch 10).

Um sicherzustellen, daß ein möglichst großer Anteil der von dem Schraubring erzeugten Längskräfte in radiale Klemmkräfte umgesetzt wird und nicht zu viel an Verformungsenergie zur Überwindung des Spiels verlorengeht, empfiehlt sich eine Längsschlitzung der Konusringe gemäß Anspruch 11.

Obwohl die Erfindung nicht an das Vorhandensein selbsthemmender Konuswinkel gebunden ist, sieht die bevorzugte Ausführungsform jedoch solche vor, um möglichst hohe Drehmomente übertragen zu können. Die dann erforderlichen Lösekräfte können entweder durch Zusatzschrauben oder durch Verschrauben des Schraubrings selbst aufgebracht werden.

Beim Anziehen des Schraubrings erfolgt im allgemeinen kein Durchdrehen des inneren Konusrings, so daß keine besonderen Maßnahmen zur Drehfestlegung dieses Teils auf der Welle bzw. dem inneren Bauteil erforderlich sind.

Um aber von der Haftung des inneren Konusrings an der Welle unabhängig zu sein und außerdem eine Drehmomentübersetzung zustande bringen zu können, empfiehlt ein sich am äußeren Bauteil abstützendes Drehwerkzeug gemäß Anspruch 13. Das Drehmoment beim Verspannen des Spannsatzes führt dann nur zu innerhalb der Spannanordnung verbleibenden Kräften, so daß ein Durchrutschen grundsätzlich nicht mehr verursacht wird.

In der bevorzugten Ausführungsform gemäß Anspruch 14 umfaßt das Drehwerkzeug ein verzahntes Ritzel, dessen Teilkreisdurchmesser wesentlich kleiner als der Durchmesser des Schraubrings ist. Wenn durch geeignete Mittel, beispielsweise einen Schraubenschlüssel oder eine Kurbel, an dem Ritzel gedreht wird, erfolgt eine Drehmomentübersetzung entsprechend dem Durchmesserverhältnis.

Die Gegenverzahnung zu dem Ritzel kann unmittelbar am Außenumfang des Schraubrings oder an einem besonderen, auf den Schraubring drehfest aufsetzbarem Werkzeug vorgesehen sein, dessen Außenumfang dann die Verzahnung trägt (Ansprüche 15, 16).

Das Werkzeug kann im allgemeinen nur von der Seite her auf den Schraubring aufgesteckt werden, der dann einen polygonalen Betätigungsumfang hat, auf den das Werkzeug in verschiedenen Winkelstellungen aufgebracht werden kann. Die Verzahnung braucht dann nicht büer den ganzen Umfang zu gehen, sondern nur einen dem Winkelunterschied zwischen zwei verschiedenen Stellungen des Werkzeugs auf dem Schraubring entsprechenden Kreisbogen einzunehmen.

Zur Lagerung und Abstützung des Ritzels an dem äußeren Bauteil empfiehlt sich die Ausführungsform nach Anspruch 18, wobei der Zapfen in der Bohrung drehbar sein oder bei um den Zapfen drehbarem Ritzel festsitzen kann.

Die Drehmomentstütze der Ansprüche 19, 20 und 21 tritt bei einer Überschreitung des Grenzdrehmoments, also beim Durchrutschen des Spannsatzes, in Funktion und führt je nach Drehsinn zu einem Lösen des Schraubrings, um Beschädigungen der Welle und des inneren Konusrings zu vermeiden, oder zu einem festeren Anziehen des Schraubrings und damit des Spannsatzes.

Die Erfindung erstreckt sich auch auf weitere, in der Beispielsbeschreibung angeführte Merkmale sowie auf alle Kombinationen der offenbarten Merkmale.

In der Zeichnung sind Ausführungsbeispiele der Erfindung dargestellt.
Fig. 1 zeigt eine Ansicht, teilweise im Längsschnitt, einer ersten Ausführungsform eines erfindungsgemäßen Spannsatzes;
Fig. 2 zeigt eine Teilansicht aus Fig. 1 mit einer zweckmäßigen Abwandlung;
Fig. 3 zeigt eine Ansicht entsprechend Fig. 1 einer zweiten Ausführungsform;
Fig. 4 und 5 zeigen der Fig. 1 entsprechende Ansichten weiterer Ausführungsformen;
Fig. 6 zeigt schematisch die Funktion eines Drehwerkzeugs;
Fig. 7 zeigt eine Teilansicht gemäß Fig. 6 von links;
Fig. 8 und 9 zeigen entsprechende Teilansihten weiterer Ausführungsformen des Drehwerkzeugs;
Fig. 10 und 11 zeigen Ansichten entsprechend den Fig. 7 bzw. 6 einer Ausführungsform mit Drehmomentstütze.

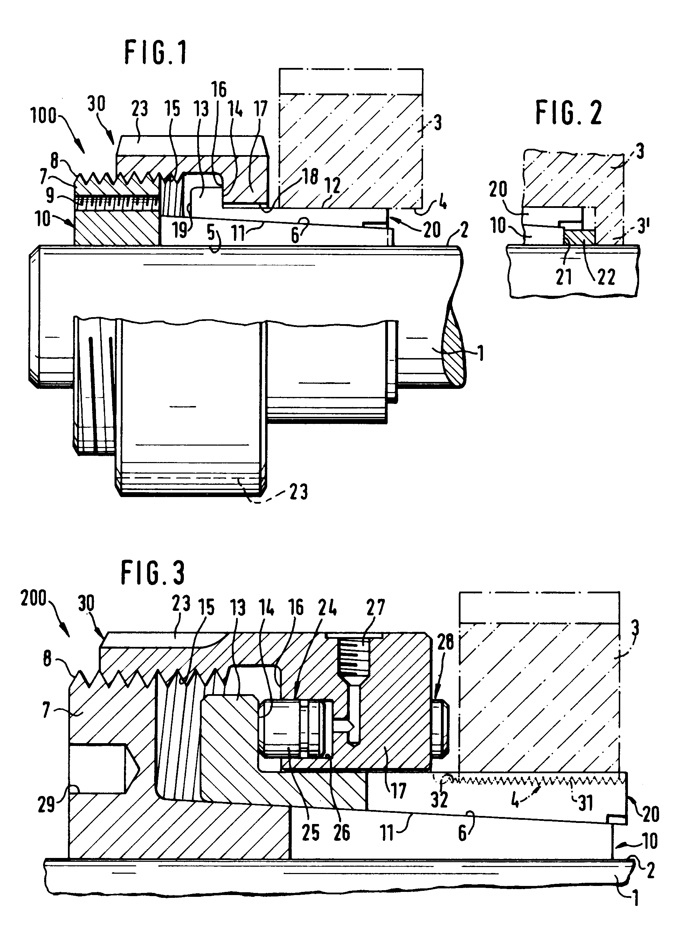

Der in Fig. 1 als Ganzes mit 100 bezeichnete Spannsatz dient dazu, auf einer Welle 1 mit zylindrischer Außenumfangsfläche 2 ein äußeres Bauteil 3 in Gestalt eines Zahnrades mit einer Ausnehmung mit zylindrischer Innenumfangsfläche 4, die radialen Abstand zu der Außenumfangsfläche 2 beläßt, fest zu spannen. In den Abstandsraum zwischen den zylindrischen Flächen 2 und 4 greift das gemäß Fig. 1 rechte Ende des Spannsatzes 100 ein.

Der Spannsatz 100 umfaßt einen inneren Konusring 10, der mit seiner zylindrischen Innenumfangsfläche 5 auf der zylindrischen Außenumfangsfläche 2 der Welle 1 anliegt und eine konische Außenumfangsfläche 6 im Selbsthemmungsbereich aufweist, an deren dickwandiges, d.h. in Fig. 1 links gelegenes Ende sich ein radial nach aussen vorspringender Umfangsrand 7 anschließt, der an seinem Außenumfang ein Gewinde 8 trägt. Unterhalb des Gewindes 8 in dem über das dickwandige Ende der Konusfläche 6 radial hinausragenden Teil des Umfangsrandes 7 sind Abdrückgewinde 9 über den Umfang verteilt eingebracht, mit deren Hilfe ein verspannter Spannsatz wieder gelöst werden kann.

Auf der Konusfläche 6 des inneren Konusrings 10 ist ein äußerer Konusring 20 angeordnet, der eine konische Innenumfangsfläche 11 von gleichem Konuswinkel wie die Konusfläche 6 und eine zylindrische Außenumfangsfläche 12 aufweist, die in der Innenumfangsfläche 4 des äußeren Bauteils anliegt.

An dem dünnwandigen Ende des äußeren Konusrings 20 ist ein radial nach außen vorspringender Umfangsbund 13 vorgesehen, der über die zylindrische Außenumfangsfläche 12 vorragt und dessen dem dickwandigen Ende zugewandte zur Achse senkrechte Anlagefläche 14 für einen vom dickwandigen Ende her aufgeschobenen Ring frei zugänglich ist.

Der Umfangsbund 13 des äußeren Konusrings 20 ist von einem Schraubring 30 umgeben, der an einem Ende ein Innengewinde 15 aufweist, welches mit dem Außengewinde 8 am Außenumfang des Umfangsrandes 7 zusammenwirkt. Der Innendurchmesser des Innengewindes 15 ist größer als der Außendurchmesser des Umfangsbundes 13, so daß der Schraubring 30 gemäß Fig. 1 von rechts über den äußeren Konusring 20 hinübergeschoben werden und das Innengewinde 15 den Umfangsbund 13 passieren kann.

An dem anderen Ende weist der Schraubring 30 einen radial nach innen vorspringenden Umfangsbund 17 auf, der radial von außen auf der den Gewinden 8,15 abgelegenen Seite hinter den Umfangsbund 13 greift und mit seiner zur Achse senkrechten Anlagefläche 16 an der Anlagefläche 14 des Umfangsbundes 13 zur Anlage kommt. Die Innenumfangsfläche 18 des Umfangsbundes 17 ist zylindrisch und beläßt etwas Spiel zur Außenumfangsfläche 12 des äusseren Konusrings 20, um hier Reibung zu vermeiden.

Beim Zusammensetzen des Spannsatzes 100 kann der äussere Konusring 20 auf den inneren Konusring 10 aufgeschoben und sodann der Schraubring 30 gemäß Fig. 1 von rechts darübergeschoben und an den Gewinden 8,15 zum Eingriff gebracht werden. Dadurch wird der Spannsatz 100 eine zusammenhängende Baueinheit. Durch Anziehen des Schraubringes 30 wird der äußere Konusring 20 gemäß Fig. 1 nach links auf den inneren Konusring 10 hinaufgezogen, wodurch eine radiale Aufweitung des äußeren Konusrings 20 und somit die Verspannung an der Innenumfangsfläche 4 stattfinden.

Zur Vermeidung von zu großen Verlusten an von dem Schraubring 30 aufgebrachter axialer Spannkraft ist der äußere Konusring 20 an einer Stelle radial durchgehend geschlitzt, was durch die fehlende Schraffierung angedeutet ist, während der innere Konusring 10 im Bereich der Konusfläche 6 an mehreren über den Umfang gleichmäßig verteilten Stellen geschlitzt ist.

Zum Lösen eines mit selbsthemmenden Konusflächen 6,11 versehenen Spannsatzs 100 werden in die Abdrückgewindebohrungen 9 Abdrückschrauben eingeschraubt, die sich vor die der Anlagefläche 14 gegenüberliegende Stirnfläche 19 des Umfangsbundes 13 des äußeren Konusrings 20 setzen. Es kann aber auch der Schraubring 30 mit seiner dem äusseren Bauteil 3 zugewandten Stirnseite an diesem zur Anlage gebracht und das Lösen durch weiteres Verschrauben in dieser Richtung bewirkt werden.

Wenn der Spannsatz 100 der Fig. 1 verspannt wird, macht das auf der Welle 1 festzulegende äußere Bauteil 3 die axiaLE Verlagerung des äußeren Konusrings 20 gegenüber dem auf der Welle 1 fest sitzenden inneren Konusring 10 mit. In vielen Fällen spielt dies keine Rolle. Wenn aber erwünscht ist, daß das äußere Bauteil 3 in Achsrichtung der Welle 1 beim Verspannen des Spannsatzes 100 stehenbleibt, kann eine Anordnung nach Fig. 2 gewählt werden. Das äußere Bauteil 3 hat hierbei einen radial nach innen bis vor die am dünnwandigen Ende des inneren Konusrings 10 gelegene Stirnseite 21 desselben vorspringenden Ansatz 3′, der sich entweder unmittelbar an der Stirnfläche 21 oder über einen Zwischenring 22 an der Stirnfläche 21 abstützt. Bei der Verlagerung des äußeren Konusrings 20 gemäß Fig. 2 nach links wird dann das äussere Bauteil 3 gegenüber der Welle 1 nicht mehr mitgenommen.

Um auf den Schraubring 30 das für die Verspannung notwendige Drehmoment aufbringen zu können, sind über seinen Umfang verteilte achsparallele Nuten 23 vorgesehen, in die ein entsprechendes Drehwerkzeug eingreifen kann.

Bei dem Spannsatz 200 der Fig. 3 sind funktionell entsprechende Teile mit gleichen Bezugszahlen gekennzeichnet.

Der Unterschied zu dem Spannsatz 100 besteht bei dem Spannsatz 200 darin, daß in der dem Umfangsbund 13 des äußeren Konusrings 20 zugewandten Anlagefläche 16 des Umfangsbundes 17 des Schraubringes 30 mehrere über den Umfang verteilte,achsparallel wirkende,räumlich kleine Kolben/Zylindereinheiten angeordnet sind, deren Kolben aus der zugehörigen Zylinderbohrung 26 in dem Umfangsbund 17 heraus gegen die Anlagefläche 14 des Umfangsbundes 13 vorgeschoben werden, wenn über die Anschlüsse 27 ein hydraulisches Druckmedium eingeleitet wird. Dadurch wird der äußere Konusring 20 gemäß Fig. 3 nach links auf den inneren Konusring 10 hinaufgezogen. Die Kraft wird über den Schraubring 30 und die Gewinde 8,15 auf den inneren Konusring 10 übertragen. Die Kolben 25 können von Anfang an, d.h. wenn sie am Grund der Zylinderbohrung 26 anliegen, schon etwas aus der Anlagefläche 16 hervorstehen oder aber auch zunächst ganz unter der Anlagefläche 16 verschwunden sein.

Es kann also zunächst der Schraubring 30 bis zu einer gewissen Verspannung angezogen werden, worauf die weitere Verspannung hydraulisch vorgenommen wird, indem die Kolben 25 unter hohem Druck ausgefahren werden.

Mit ähnlichen Kolben/Zylindereinheiten, die jedoch zur anderen Seite wirken und gegen das auf dem äußeren Konusring festgeklemmte äußere Bauteil 3 zur Anlage kommen, kann die Lösung des Spannsatzes 200 herbeigeführt werden. Bei der Ausübung von Druck gegen die gemäß Fig. 3 linke Seite des äußeren Bauteils 3 wird es zuerst an den Konusflächen 6,11 zu einem Abrutschen und damit zur Lösung des Spannsatzes 200 kommen.

Die Bohrungen 29 in dem Umfangsrand 7 dienen dazu, beim Beginn des Verspannens, wenn der innere Konusring 10 noch nicht fest auf der Welle 1 sitzt, gegen das auf den Schraubring 30 aufgebrachte Drehmoment mit einem geeigneten Drehwerkzeug gegenhalten zu können.

In Fig. 3 ist als Alternative gestrichelt angedeutet, daß die Ausnehmung 4 statt mit einer glatten zylindrischen Innenumfangsfläche auch mit einem Innengewinde 31 versehen sein kann, welches auf ein Außengewinde 32 auf dem in Fig. 3 rechten, d.h. dickwandigen Enden des äußeren Konusrings 20 aufgeschraubt ist. Das äußere Bauteil 3 kann in einem gewissen Bereich axial justiert werden. Beim Verspannen des Spannsatzes 200 wird das äußere Bauteil 3 auf dem äusseren Konusring 20 festgesetzt.

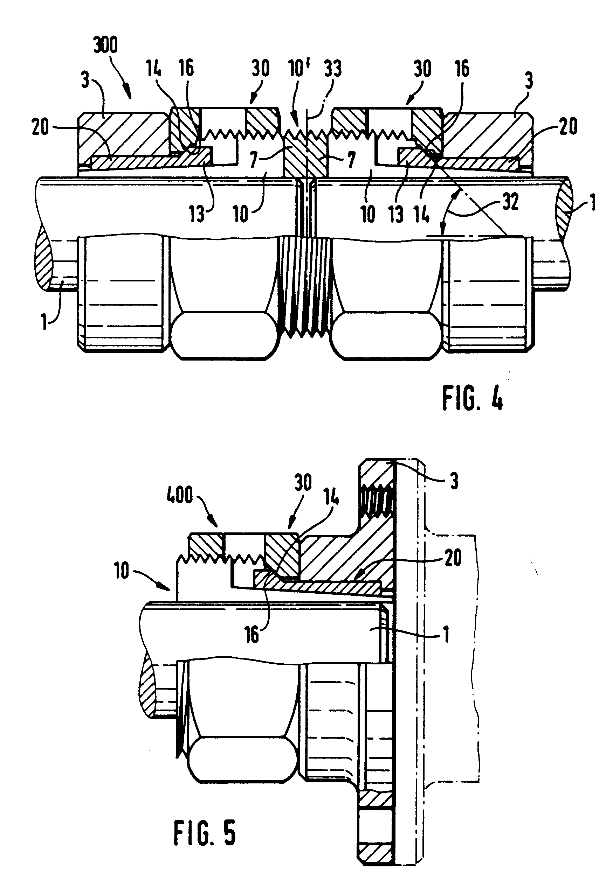

In Fig. 4 ist ein Spannsatz 300 dargestellt, der zu einer zur Achse senkrechten Mittelebene 33 spiegelsymmetrisch ausgebildet ist. Der Doppelkonusring 10′ besteht aus zwei inneren Konusringen 10 entsprechend Fig. 1, die im Bereich ihrer Umfangsränder 7 einstückig miteinander verbunden sind. Die übrigen Elemente sind dementsprechend doppelt vorhanden. Der Spannsatz 300 dient als Wellenkupplung. Zwei Wellen 1 greifen mit ihren Enden von einander entgegengesetzen Seiten in den Doppelkonusring 10′ ein und werden durch Betätigung der Spannringe 30,30 separat mit dem Doppelkonusring 10′ verbunden. Die "äußeren Bauteile 3" sind in diesem Fall dickwandige Spannringe, die lediglich die Umfangsspannung zur Erzeugung der radialen Klemmkraft aufzubringen haben.

Eine Besonderheit besteht bei dieser Ausführungsform darin, daß die Anlageflächen 14,16 des äußeren Konusrings 20 bzw. des Schraubrings 30 nicht, wie bei der Ausführungsform nach den Fig. 1 und 3, senkrecht zur Achse verlaufen, sondern eine Schrägstellung aufweisen, d.h. konisch sind. Der Winkel 32 zur Achse beträgt in dem Ausführungsbeispiel der Fig. 4 etwa 45^{o}. Dadurch erfolgt auch im Bereich des Umfangsbundes 13 des äußeren Konusrings 20 noch eine gewisse radiale Anpressung desselben, was einen Beitrag zum übertragbaren Drehmoment liefert.

In Fig. 5 ist ein Ausführungsbeispiel dargestellt, bei welchem das äußere Bauteil 3 als Kupplungsflansch ausgebildet ist, welcher im Bereich des Endes einer Welle 1 mittels des Spannsatzes 400 befestigbar ist. Auch bei dem Spannsatz 400 haben die Anlageflächen 14,16 die bei der Fig. 4 erwähnte Schrägstellung.

Gemeinsam ist den Spannsätzen 300,400 der Fig. 4 und 5, daß die Schraubringe 30 am Außenumfang wie eine Mutter sechseckig ausgebildet sind, um eine Angriffsmöglichkeit für ein Drehwerkzeug zu bieten.

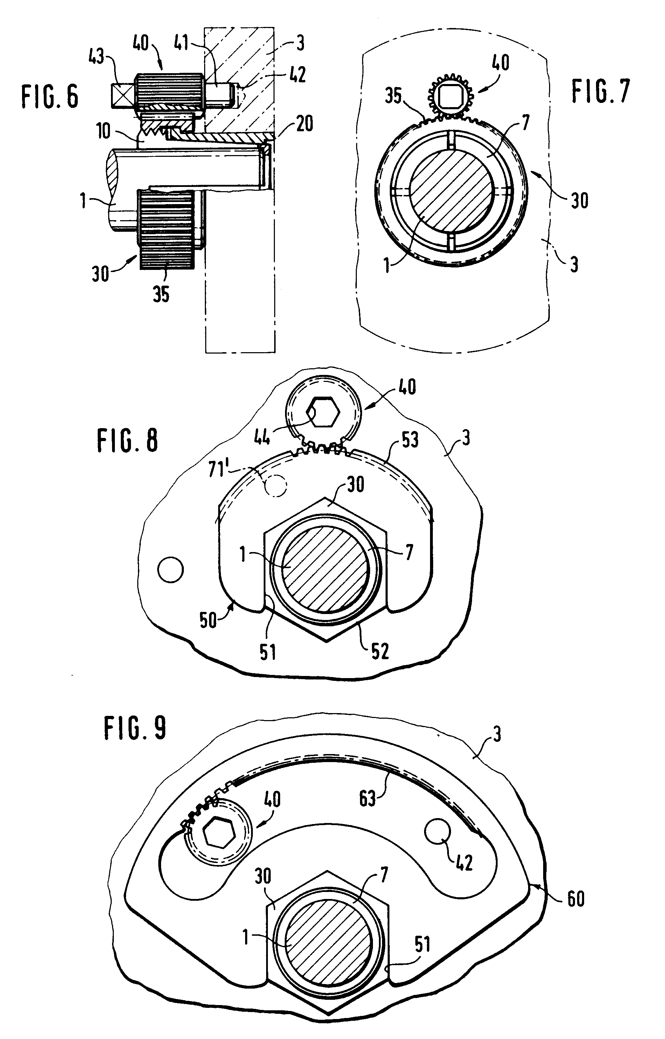

Anstatt zum Anziehen des Schraubringes 30 mit einem entsprechenden Drehwerk, zum Beispiel einem Hakenschlüssel in Nuten 31 am Umfang des Schraubringes 30 (Fig. 1, 3) oder mit einem normalen Schraubenschlüssel (Fig. 4, 5) am Umfang des Schraubringes 30 anzugreifen, kann gemäß den Fig. 6 bis 9 auch ein besonderes Drehwerkzeug vorgesehen sein.

In der Ausführungsform nach den Fig. 6 und 7 besitzt der Schraubring 30 an seinem Außenumfang eine Verzahnung 35, in die die Verzahnung eines Ritzels 40 eingreift, welches mit einem Zapfen 41 in einer achsparallelen Bohrung 42 des äußeren Bauteils 3 drehbar gelagert ist und am anderen Ende einen Ansatz 43 mit Schlüsselflächen aufweist, an denen eine Kurbel oder ein Schraubenschlüssel angreifen kann. Der Druchmesser des Teilkreises der Verzahnung des Ritzels 40 beträgt in dem Ausführungsbeispiel nur etwa ein Viertel des Teilkreises der Verzahnung 35, so daß bei einem bestimmten Drehmoment zur Drehung des Ritzels 40 auf den Schraubring 30 etwa das vierfache Drehmoment ausgeübt wird. Eine alternative Ausführungsform ist in Fig. 8 wiedergegeben. Es ist ein Werkzeug 50 mit einem Schraubenschlüsselmaul 51 vorgesehen, welches auf einen Außensechskant 52 des Schraubrings 30 paßt. Auf der dem Maul 51 abgewandten Seite weist das Werkzeug 50 eine Verzahnung 53 auf, in die die Verzahnung des Ritzels 40 eingreift. Bei einer Drehung des Ritzels 40 an dem Innensechskant 44 wird der Schraubring 30 ebenso gedreht wie bei der Ausführungsform nach den Fig. 6 und 7. Der Vorteil dieser Ausführungsform besteht darin, daß das Werkzeug 50 von der Seite auf den Schraubring 30 aufgesteckt werden kann und also kein offenes Ende der Welle 1 benötigt wird und daß die Verzahnung 53 nur einmal, nämlich an dem Werkzeug 50 vorgesehen sein muß, während bei der Ausführungsform nach den Fig. 6 und 7 jeder einzelne Schraubring eine Verzahnung besitzen muß.

Wenn beim Festziehen des Schraubrings 30 nach Fig. 8 das Ritzel am Ende der sich nur über einen Winkel von etwa 90^{o} erstreckenden Verzahnung 53 angekommen ist, wird das Werkzeug 50 auf dem Schraubring 30 entsprechend umgesteckt.

Das Werkzeug 60 der Fig. 9 unterscheidet sich dadurch von dem Werkzeug 50, daß statt der Außenverzahnung 53 eine kreisförmige Ausnehmung 61 mit einer an der radial äußeren Begrenzung angebrachten Verzahnung 63 vorgesehen ist, in die das Ritzel 40 von innen eingreift. Die kreisförmige Ausnehmung 61 des Werkzeugs 60 ist so breit, daß das Ritzel 40 in die äußere Verzahnung 63 eingreift und durch die innere Begrenzung der kreisförmigen Ausnehmung 61 nicht herausspringen kann.

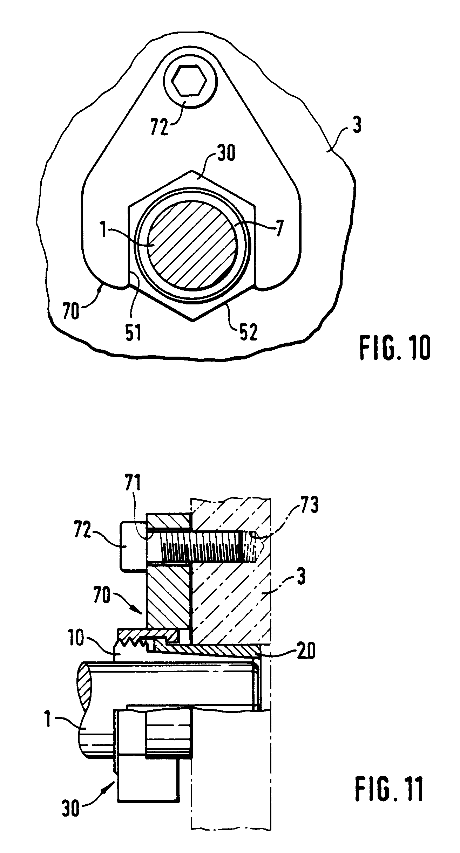

In den Fig. 10 und 11 ist eine Drehmomentstütze 70 dargestellt, die an dem fertig verspannten Spannsatz 6,7, 30 angebracht wird. Der Schraubring 30 hat in dem Ausführungsbeispiel wieder einen Außensechskant 52, und es ist die Drehmomentstütze 70 als Platte mit einem Schraubenschlüsselmaul 51 ausgebildet, welche auf den Außensechskant 52 paßt. Außerhalb des Schraubenschlüsselmauls 51, welches also einen dem Außenumfang 52 der Drehmomentstütze 70 angepaßten Ausschnitt bildet, ist eine Lochung 71 senkrecht zur Plattenebene vorgesehen, durch die eine Schraube 72 hindurch- und in eine Gewindebohrung 73 des äußeren Bauteils 3 eingreift. Die Drehmomentstütze 70 verbindet also den Schraubring 30 drehfest mit dem äußeren Bauteil 3. Das ist aber nicht ihre eigentliche Funktion, denn die Konusringe 6,7 sitzen, wenn der Schraubring 30 einmal angezogen ist, wegen des selbsthemmenden Winkels ohnehin fest aufeinander. Die eigentliche Funktion der Drehmomentstütze 70 beginnt bei einer Überschreitung des Grenzdrehmoments des Spannsatzes, wenn dieser also auf der Welle 1 durchzurutschen beginnt. Dann nimmt das äußere Bauteil die Drehmomentstütze 70 und damit den Schraubring 30 in Richtung des Drehmoments mit, wodurch je nach Anordnung der gewinde ein Lösen der Konusringe 6,7 oder ein stärkeres Anziehen derselben stattfindet. Ersteres kann erwünscht sein, um im Falle eines zu grossen Drehmoments sogleich eine Entlastung zu schaffen und zu verhüten, daß die zusammenwirkenden zylindrischen Flächen der Welle 1 und des Konusrings 7 ruiniert werden. Letzteres kann erwünscht sein, um das überhöhte Drehmoment durch sofortiges stärkeres Anziehen des Spannsatzes abzufangen. Bei gleichem Drehsinn kann die Wirkung der Drehmomentstütze 70 geändert werden, indem der Spannsatz herumgedreht und die Drehmomentstütze 70 auf der anderen axialen Seite des äußeren Bauteils 3 angebracht werden.

Eine Drehmomentstütze kann auch dadurch realisiert werden, daß zum Beispiel das Werkzeug 50 in Fig. 8 nach dem Anziehen an dem Schraubring 30 belassen und mittels einer außerhalb des Schraubenschlüsselmauls 51 angebrachten Schraube mit dem äußeren Bauteil 3 drehverbunden wird, die die strichpunktiert angedeutete Bohrung 71′ durchgreift.

Die Dicke der Drehmomentstütze sollte nicht zu gering sein, damit der Schraubring auch bei unterschiedlichen Positionen in Längsrichtung sicher erfaßt werden kann.

## Patentansprüche

1. Spannsatz zur Übertragung von Drehmomenten und/oder Axialkräften zwischen einem eine zylindrische Außenumfangsfläche (2) aufweisenden inneren Bauteil (1), insbesondere einer Welle, und mindestens einem darauf angeordneten, eine Ausnehmung (4) mit einer zylindrischen Innenumfangsfläche aufweisenden äußeren Bauteil (3), insbesondere einer Habe,
mit einem inneren Konusring (10) mit einer zylindrischen, zur Anlage auf der Außenumfangsfläche (2) des inneren Bauteils (1) bestimmten Innenumfangsfläche (5) und einer konischen Außenumfangsfläche (6),
mit einem äußeren Konusring (20) mit einer zur Anlage an der zylindrischen Innenumfangsfläche (4) der Ausnehmung bestimmten Außenumfangsfläche (12) und einer zum Zusammenwirken mit der konischen Außenumfangsfläche (6) des inneren Konusrings (10) bestimmten konischen Innenfangsfläche (11)
und mit einem auf ein Gewinde (8) des inneren Konusrings (10) aufschraubbaren Schraubring (30), der mit einem radial nach innen vorspringenden Umfangsbund (17) hinter einen radial nach außen vorspringenden Umfangsbund (13) des äußeren Konusrings (20) greift,
dadurch gekennzeichnet,
daß der Umfangsvorsprung (13) des äußeren Konusrings (20) am dünnwandigen Ende desselben vorgesehen ist und über den Außenumfang (12) der zum dickwandigen Ende des äußeren Konusrings (20) hin vorgelagerten Teile des äußeren Konusrings (20) hinaus nach außen vorspringt
und daß das Gewinde (8) am dickwandigen Ende des inneren Konusrings (10) vorgesehen ist und über den Außenumfang der zum dünnwandigen Ende des inneren Konusrings (10) hin vorgelagerten Teile des inneren Konusrings (10) und über den Außenumfang des Umfangsbundes (13) hinaus nach außen vorspringt.

2. Spannsatz nach Anspruch 1, dadurch gekennzeichnet, daß der innere Konusring (10) einen radial nach aussen vorspringenden Umfangsrand (7) aufweist, auf dessen Außenumfang das Gewinde (8) aufgebracht ist und der vor der Stirnseite (19) des radial nach außen vorspringenden umfangsbundes (13) des äußeren Konusrings (20) axiale Durchgangsgewindebohrungen (9) für Abdrückschrauben aufweist.

3. Spannsatz nach Anspruch 1 oder 2, dadurch gekennzeichnet, daß in der dem Umfangsbund (13) des äußeren Konusrings (20) zugewandten Anlagefläche (16) des Umfangsbundes (17) des Schraubrings (30) über den Umfang verteilte hydraulischen Kolben/Zylindereinheiten (24) angeordnet sind, deren Kolben sich bei Betätigung gegen die Anlagefläche (14) des Umfangsbundes (13) des äußeren Konusrings (20) setzen.

4. Spannsatz nach einem der Ansprüche 1 bis 3, dadurch gekennzeichnet, daß in der dem äußeren Bauteil (3) zugewandten Stirnseite des radial nach innen weisenden Umfangsbundes (17) des Schraubrings (30) über den Umfang verteilte hydraulische Kolben/Zylindereinheiten (28) angeordnet sind, deren Kolben sich bei Betätigung gegen die zugewandte Stirnseite des äußeren Bauteils (3) setzen.

5. Spannsatz nach einem der Ansprüche 1 bis 4, dadurch gekennzeichnet, daß der Innenumfang (18) des radial nach innen vorspringenden Umfangsbundes (17) des Schraubrings (30) radiales Spiel zum Außenumfang (12) des äußeren Konusrings (20) beläßt.

6. Spannsatz nach einem der Ansprüche 1 bis 5, dadurch gekennzeichnet, daß das äußere Bauteil (3) in seiner Ausnehmung (4) ein Innengewinde (31) und der äußere Konusring (20) auf seinem Außenumfang ein Außengewinde (32) tragen und das äußere Bauteil (3) auf den äußeren Konusring (20) aufgeschraubt ist.

7. Spannsatz nach einem der Ansprüche 1 bis 6, dadurch gekennzeichnet, daß er zu einer zur Achse senkrechten Mittelebene spiegelsymmetrisch ausgebildet ist und einen inneren Koppelkonusring (10′) mit zwei darauf angeordneten äußeren Konusringen (20) und zwei Spannringen (30) umfaßt.

8. Spannsatz nach einem der Ansprüche 1 bis 6, dadurch gekennzeichnet, daß das äußere Bauteil (3) als Kupplungsflansch ausgebildet ist.

9. Spannsatz nach einem der Ansprüche 1 bis 8, dadurch gekennzeichnet, daß die Anlageflächen (14,16) des äußeren Konusrings (20) und des Schraubrings (30) derart abgeschrägt sind, daß der äußere Konusring (20) im Bereich seines Umfangsbundes (13) beim Anziehen des Spannsatzes eine radial nach innen gerichtete Kraftkomponente erfährt.

10. Spannsatz nach Anspruch 9, dadurch gekennzeichnet, daß der Winkel (32) der Abschrägung etwa 45^{o} beträgt.

11. Spannsatz nach einem der Ansprüche 1 bis 10, dadurch gekennzeichnet, daß der innere und/oder der äußere Konusring (10,20) zumindest im Bereich der Konusflächen (6,11) radial durchgehend längsgeschlitzt sind.

12. Spannsatz nach einem der Ansprüche 1 bis 11, dadurch gekennzeichnet, daß der Konuswinkel der Konusflächen (6,11) im Selbsthemmungsbereich liegt.

13. Spannsatz nach einem der Ansprüche 1 bis 12, dadurch gekennzeichnet, daß ein sich auf einer Drehachse (41) am äußeren Bauteil (3) abstützendes, am Umfang des Schraubrings (30) angreifendes Drehwerkzeug vorgesehen ist.

14. Spannsatz nach Anspruch 13, dadurch gekennzeichnet, daß das Drehwerkzeug ein verzahntes Ritzel (40) umfaßt, dessen Teilkreisdurchmesser wesentlich kleiner als der Außendurchmesser des Schraubrings (30) ist.

15. Spannsatz nach Anspruch 14, dadurch gekennzeichnet, daß der Schraubring (30) am Außenumfang eine dem Ritzel (40) entsprechende Verzahnung (35) aufweist.

16. Spannsatz nach Anspruch 14, dadurch gekennzeichnet, daß ein auf den Schraubring (30) drehfest aufsetzbares Werkzeug (50,60) vorgesehen ist, an dessen Umfang die Verzahnung (53,63) vorgesehen ist.

17. Spannsatz nach Anspuch 16, dadurch gekennzeichnet, daß das Werkzeug (50,60) in verschiedenen Winkelstellungen auf den Schraubring (30) aufsetzbar ist und die Verzahung (53,63) einen mindestens einem Winkelschritt entsprechenden Kreisbogen einnimmt.

18. Spannsatz nach einem der Ansprüche 13 bis 17, dadurch gekennzeichnet, daß in dem äußeren Bauteil (3) eine achsparallele Bohrung (42) vorgesehen sit, in der das Ritzel (40) um einen Zapfen (41) drehbar ist.

19. Spannsatz nach einem der Ansprüche 1 bis 18, dadurch gekennzeichnet, daß eine am äußeren Bauteil (3) angreifende Drehmomentstütze (70 für den Schraubring (30) vorgesehen ist.

20. Spannsatz nach Anspruch 19, dadurch gekennzeichnet, daß die Drehmomentstütze (70) als Platte ausgebildet ist, die einen dem von der Kreisform abweichenden Außenabumfang (52) des Schraubrings (30) angepaßten Ausschnitt (51) sowie außerhalb des Ausschnitts (51) eine Lochung (71) für den Durchgriff eines in das äußere Bauteil (3) eingreifenden Bolzens (72) aufweist.

21. Spannsatz nach Anspruch 20, dadurch gekennzeichnet, daß die Drehmomentstütze durch das Werkzeug (50,60) gebildet ist, welches eine zusätzliche Lochung (71′) für den Durchgriff eines in das äußere Bauteil (3) eingreifenden Bolzens aufweist.

## Claims

1. Clamping assembly for transmitting torques and/or axial forces between an inner component (1) , in particular a shaft, having a cylindrical external surface (2) and at least one outer component (3), in particular a hub, arranged on it and having an opening (4) with a cylindrical internal surface,
with an inner taper ring (10) with a cylindrical inner surface (5) designed to engage the outer surface (2) of the inner component (1) and a conical outer surface (6),
with an outer taper ring (20) with an outer surface (12) designed to engage the cylindrical inner surface (4) of the opening and a conical inner surface (11) designed to co-operate with the conical outer surface (6) of the inner taper ring (10),
and with a screwed ring (30) which can be screwed on to a thread (8) on the inner taper ring (10) and having a radially inwardly projecting peripheral collar (17) by which it engages behind a radially outwardly projecting peripheral collar (13) of the outer taper ring (20),
characterised in that,
the peripheral projection (13) on the outer taper ring (20) is provided on the smaller end of the latter and projects outwards beyond the outer periphery (12) of the portions of the outer taper ring (20) preceding the thicker end of the outer taper ring (20)
and that the thread (8) is provided on the thicker end of the inner taper ring (10) and projects outwards over the outer periphery of the portions of the inner taper ring (10) preceding the thinner end of the inner taper ring (10) and over the outer periphery of the peripheral collar (13).

2. Clamping assembly according to claim 1, characterised in that the inner taper ring (10) has a radially outwardly projecting peripheral flange (7), on the outer periphery of which the thread (8) is provided and which has axial through-going threaded bores (9) for release screws in front of the face (19) of the radially outwardly projecting peripheral collar (13).

3. Clamping assembly according to claim 1 or 2, characterised in that circumferentially distributed hydraulic piston/cylinder units (24) are arranged in the engaging surface (16) of the peripheral collar (17) of the screwed ring (30) which is towards the peripheral collar (13) of the outer taper ring (20), the pistons of the units engaging, on actuation, against the engaging face (14) of the peripheral collar (13).

4. Clamping assembly according to one of claims 1 to 3, characterised in that circumferentially distributed hydraulic piston/cylinder units (28) are arranged in the face which is towards the outer component (3) of the radially inwardly projecting peripheral collar (17) of the screwed ring (30), the pistons of the units, on actuation, engaging against the opposed face of the outer component (3).

5. Clamping assembly according to one of claims 1 to 4, characterised in that the inner periphery (18) of the radially inwardly projecting collar (17) of the screwed ring (30) has radial clearance in relation to the outer surface (12) of the outer taper ring (20).

6. Clamping assembly according to one of claims 1 to 5, characterised in that the outer component (3) has in its opening (4) a screw thread (31) and the outer taper ring (20) has an external thread (32) on its outer periphery and the outer component (3) is screwed on to the outer taper ring (20).

7. Clamping assembly according to one of claims 1 to 6, characterised in that it is made mirror-symmetrical about a central plane perpendicular to its axis and includes an inner double taper ring (10') with two outer taper rings (20) arranged on it and two clamping rings (30).

8. Clamping assembly according to one of claims 1 to 6, characterised in that the outer component (3) is in the form of a coupling flange.

9. Clamping assembly according to one of claims 1 to 8, characterised in that the engaging faces (14, 16) of the outer taper ring (20) and the screwed ring (30) are inclined in such a way that the outer taper ring (20) experiences on tightening of the clamping assembly a radially inwardly directed force component in the region of its peripheral collar (13).

10. Clamping assembly according to claim 9, characterised in that the angle (32) of the inclination amounts to about 45°.

11. Clamping assembly according to one of claims 1 to 10, characterised in that the inner and/or the outer taper ring (10, 20) is longitudinally slotted radially right through in the region of the taper face (6, 11).

12. Clamping assembly according to one of claims 1 to 11, characterized in that the cone angle of the taper surfaces (6, 11) is in the self-jamming range.

13. Clamping assembly according to one of claims 1 to 12, characterised in that a torque-applying tool is provided supporting itself on an axis of rotation (41) on the outer component (3) and engaging the periphery of the screwed ring (30).

14. Clamping assembly according to claim 13, characterised in that the torque-applying tool includes a toothed pinion (40) of which the pitch circle diameter is substantially smaller than the outer diameter of the screwed ring (30).

15. Clamping assembly according to claim 14, characterised in that the screwed ring (30) has on its outer periphery an array of teeth (35) matching the pinion (40).

16. Clamping assembly according to claim 14, characterised in that the tool (50, 60) is capable of being placed in a non-rotational manner on the screwed ring (30) and has the teeth (53, 63) on its periphery.

17. Clamping assembly according to claim 16, characterised in that the tool (50, 60) can be placed on the screwed ring in different angular positions and the teeth (53, 63) cover an arc corresponding at least to one angular step.

18. Clamping assembly according to one of claims 13 to 17, characterised in that there is provided in the outer component (3) a bore (42) which is parallel to the axis and in which the pinion (40) is rotatable about a pin 41.

19. Clamping assembly according to one of claims 1 to 18, characterised in that a torque lock (70) for the screwed ring (30) is provided, engaging on the outer component (3).

20. Clamping assembly according to claim 19, characterised in that the torque lock (70) is in the form of a plate which has an opening (51) matched to the non-circular outer periphery (52) of the screwed ring (30) as well as a hole (71) clear of the opening (51) for the passage of a bolt (72) engaging in the outer component (3).

21. Clamping assembly according to claim 20, characterised in that the torque lock is formed by the tool (50, 60) which has an additional hole (71') for the passage of a bolt engaging in the outer component (3).

## Revendications

1. Unité de serrage pour transmettre des couples de rotation et/ou des forces axiales entre une pièce constitutive (1) intérieure présentant, une surface périphérique extérieure cylindrique (2), en particulier un arbre, et au moins une pièce constitutive extérieure (3) avec une surface périphérique intérieur cylindrique, en particulier un moyeu :
- avec une bague conique (10) intérieure avec une surface périphérique intérieure (5) cylindrique, déterminée pour venir en appui sur la surface périphérique extérieure (2) de la pièce constitutive intérieure (1) et une surface périphérique extérieure (6) conique,
- avec une bague conique extérieure (20) avec une surface périphérique extérieure (12) déterminée pour venir en appui sur la surface périphérique intérieure cylindrique (4) de l'évidement et une surface périphérique intérieure conique (11) déterminée pour coopérer avec la surface périphérique extérieure conique (6) de la bague conique intérieure (10),
- et avec un anneau fileté (30) vissé sur un filetage (8) de la bague conique intérieure (10), qui vient en prise avec un collet périphérique (17) faisant saillie radialement vers l'intérieur en arrière d'un collet périphérique (13), faisant saillie radialement vers l'extérieur, de la bague conique extérieure (20),
unité de serrage caractérisée en ce que la saillie périphérique (13) de la bague conique extérieure (20) est prévue à l'extrémité, à paroi mince, de celle-ci et fait saillie vers l'extérieur au-delà du pourtour extérieur (12) des parties prémontées de la bague conique extérieure (20) à l'extrémité à paroi épaisse de la bague conique extérieure (20) et en ce que le filetage (8) est prévu à l'extrémité à paroi épaisse de la bague conique intérieure (10) et fait saillie vers l'extérieur sur le pourtour extérieur des parties de la bague conique intérieure (10) prémontées à l'extrémité à paroi mince de la bague conique intérieure (10) et sur le pourtour extérieur du collet périphérique (13).

2. Unité de serrage selon la revendication 1, caractérisée en ce que la bague conique intérieure (10) présente un bord périphérique (7) faisant saillie radialement vers l'extérieur, sur le pourtour extérieur duquel est mis ce filetage (8) et qui présente des alésages axiaux (9) filetés traversants en avant de la face frontale (19) du collet périphérique (13), faisant saillie vers l'extérieur, de la bague conique extérieure (20).

3. Unité de serrage selon la revendication 1 ou 2, caractérisée en ce que dans la surface d'appui (16) du collet périphérique (17) de l'anneau fileté (30), surface tournée vers le collet périphérique (13) de la bague conique extérieure (20), sont disposés des vérins hydrauliques (24) répartis sur le pourtour, dont les pistons reposent lors de l'actionnement sur la surface d'appui (14) du collet périphérique (13) de la bague conique extérieure (20).

4. Unité de serrage selon l'une des revendications 1 à 3, caractérisée en ce que dans la face frontale tournée vers la pièce constitutive extérieure (3) du collet périphérique (17), orientée radialement vers l'intérieur, de l'anneau fileté (30) sont disposés des vérins (28) hydrauliques répartis sur le pourtour, dont les pistons reposent lors de l'actionnement contre la paroi frontale de la pièce constitutive extérieure (3).

5. Unité de serrage selon l'une des revendications 1 à 4, caractérisé en ce que le pourtour intérieur (18) du collet périphérique (17), faisant saillie radialement vers l'intérieur, de l'anneau fileté (30) ménage un jeu radial par rapport au pourtour extérieur (12) de la bague conique extérieure (20).

6. Unité de serrage selon l'une des revendications 1 à 5, caractérisé en ce que la pièce constitutive extérieure (3) porte dans son évidement (4) un filetage intérieur (31) et la bague conique extérieure (20) porte sur son pourtour extérieur un alésage extérieur (32) et en ce que la pièce constitutive (3) est vissée sur la bague conique extérieure (20).

7. Unité de serrage selon l'une des revendications 1 à 6, caractérisée en ce qu'elle est constituée de façon symétrique par rapport à un plan médian perpendiculaire à l'axe et comporte une bague conique intérieure d'accouplement (10') avec deux bagues coniques extérieures (20) disposées dessus et deux anneaux de serrage (30).

8. Unité de serrage selon l'une des revendications 1 à 6, caractérisée en ce que la pièce constitutive extérieure (3) est constituée sous la forme d'une bride d'accouplement.

9. Unité de serrage selon l'une des revendications 1 à 6, caractérisé en ce que les surfaces d'appui (14, 16) de la bague conique extérieure (20) et de l'anneau fileté (30) sont chanfreinées de telle façon que la bague conique extérieure (20) subisse l'action d'une composante de force dirigée radialement vers l'intérieur dans la zone de son collet périphérique (136) quand on visse l'unité de serrage.

10. Unité de serrage selon la revendication 9, caractérisée en ce que l'angle (32) au chanfrein est d'environ 45°.

11. Unité de serrage selon l'une des revendications 1 à 10, caractérisée en ce que la bague conique intérieure et/ou extérieure (10, 20) est fendue dans le sens de la longueur au moins dans la zone des surfaces conique (6, 11) radialement de bout en bout.

12. Unité de serrage selon l'une des revendications 1 à 11, caractérisée en ce que l'angle de conicité des surfaces coniques (6, 11) se trouve dans la zone d'auto-blocage.

13. Unité de serrage selon l'une des revendications 1 à 12, caractérisée en ce qu'il est prévu un outil de rotation s'appuyant sur un axe de rotation (41) sur la pièce constitutive extérieure (3) et, venant en prise sur le pourtour de l'anneau fileté (30).

14. Unité de serrage selon la revendication 13, caractérisée en ce que l'outil de rotation comprend un pignon denté (40), dont le diamètre d'arc de cercle est sensiblement plus petit que le diamètre extérieur de l'anneau fileté (30).

15. Unité de serrage selon la revendication 14, caractérisée en ce que l'anneau fileté (30) présente sur le pourtour extérieur une denture (35) qui correspond au pignon (40).

16. Unité de serrage selon la revendication 14, caractérisée en ce qu'il est prévu un outil (50, 60) pouvant être monté de façon solidaire en rotation sur l'anneau fileté (30), sur le pourtour duquel est prévue la denture (53, 63).

17. Unité de serrage selon la revendication 16, caractérisée en ce que l'outil (50, 60) peut être monté dans différentes positions angulaires sur l'anneau fileté (30) et la denture (53, 63) occupe un arc de cercle correspondant au moins à un secteur angulaire.

18. Unité de serrage selon l'une des revendications 13 à 17, caractérisée en ce que dans la pièce constitutive extérieure (3) il est prévu un alésage parallèle à l'axe (42), dans lequel le pignon (40) peut tourner autour d'un tenon (41).

19. Unité de serrage selon l'une des revendications 1 à 18, caractérisée en ce qu'il est prévu un support de couple de rotation (70), venant en prise sur la pièce constitutive extérieure (3), pour l'anneau fileté (30).

20. Unité de serrage selon la revendication 19, caractérisée en ce que le support de couple de rotation (70) est constitué comme une plaque qui présente une section (51) adaptée au pourtour extérieur (52) de l'anneau fileté (30) s'écartant d'une forme circulaire ainsi qu'en dehors de la section (51) un trou (71) pour le passage d'un tenon (72) venant en prise dans la pièce constitutive extérieure (3).

21. Unité de serrage selon la revendication 20, caractérisée en ce que le support de couple de rotation est formé par l'outil (50, 60) qui présente un trou complémentaire (71') pour le passage d'un tenon venant en prise dans la pièce constitutive extérieure (3).
